# EUROPÄISCHE PATENTSCHRIFT

(11) **EP 1 106 291 B1**
(45) Veröffentlichungstag und Bekanntmachung des Hinweises auf die Patenterteilung: **20.07.2005**
(21) Anmeldenummer: 00125183.4
(22) Anmeldetag: 18.11.2000
(51) Int. Cl.: B23F 21/16

(54) **Wälzfräswerkzeug zur Herstellung der Aussenverzahnung von Zahnrädern**
Hob for making external gears
Fraise-mère pour la fabrication des roues à denture extérieure

(30) Priorität: 02.12.1999 DE 19957983
(43) Veröffentlichungstag der Anmeldung: 13.06.2001
(73) Patentinhaber: ZF Lenksysteme GmbH, 73527 Schwäbisch Gmünd (DE)
(72) Erfinder: Eisenhuth, Andreas, 73529 Schwäbisch Gmünd (DE)

(56) Entgegenhaltungen:
- DD-A- 158 317
- US-A- 3 892 022
- PATENT ABSTRACTS OF JAPAN vol. 016, no. 153 (M-1235), 15. April 1992 (1992-04-15) & JP 04 008422 A (AZUMI KK;OTHERS: 01), 13. Januar 1992 (1992-01-13)
- PATENT ABSTRACTS OF JAPAN vol. 004, no. 029 (M-002), 14. März 1980 (1980-03-14) & JP 55 005279 A (AZUMI KK), 16. Januar 1980 (1980-01-16)

## Beschreibung

Die vorliegende Erfindung betrifft ein Werkzeug zur Herstellung von Evolventen-Verzahnungen nach dem sogenannten Wälzfräsverfahren. Dieses Verfahren ist beispielsweise im Handbuch "Pfauter-Wälzfräsen", Springer-Verlag, Berlin, 1976 beschrieben. Gegenstand der vorliegenden Erfindung ist die Ausgestaltung der Schneidflanken des Wälzfräswerkzeugs. Ein Wälzfräswerkzeug ist aus JP 04 008 422 bekannt.

Als Abwälzverfahren, bei dem eine Vielzahl definierter Schneiden an der Ausbildung einer Werkstückzahnflanke beteiligt ist, erzeugt das Wälzfräsen auf den bearbeiteten Zahnflanken eine Hüllschnittstruktur. Die Größe der einzelnen Hüllschnittfacetten und somit auch die Größe der damit verbundenen Flankenform- und Profilformabweichungen hängt neben dem gewählten Vorschub pro Werkstückumdrehung von der Anzahl der Spannuten pro Fräsergang ab. Zum Erreichen einer bestimmten Verzahnungsqualität am Werkstück ist bei den üblichen Wälzfräsern mit geradflankigem Bezugsprofil eine bestimmte Mindestzahl von Spannuten pro Fräsergang notwendig, da sonst die hüllschnittbedingten Abweichungen von der Idealengeometrie zu groß werden. Diese Mindestzahl beschränkt die Gangzahl des Fräsers bzw. die Länge der einzelnen Fräserstollen. Diese beiden Größen sind aber für den wirtschaftlichen Einsatz eines Wälzfräsers wichtig.

Der Erfindung liegt nun die Aufgabe zugrunde, die hüllschnittbedingten Abweichungen eines Wälzfräsers zu verringern und so eine kleinere Anzahl von Spannuten pro Fräsergang zu ermöglichen, ohne dabei eine Einbuße in der Werkstückqualität hinnehmen zu müssen.

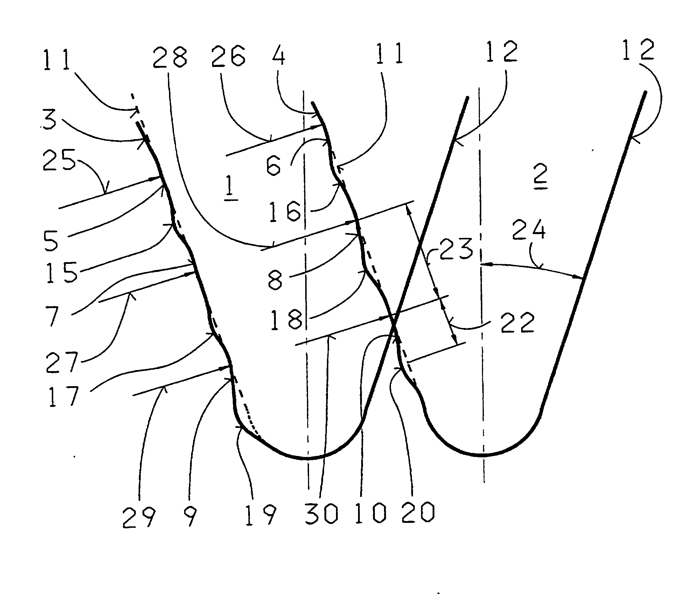

Diese Aufgabe wird bei der vorliegenden Erfindung durch eine erfindungsgemäße Ausgestaltung der Schneidkanten der einzelnen Fräserstollen gelöst, die im folgenden anhand der Zeichnung näher erläutert wird. Wie bei Wälzfräsern üblich, erfolgt die Definition der Schneidengeometrie mit Hilfe des sogenannten Zahnstangen-Bezugsprofils. Die Zeichnung zeigt exemplarisch die Bezugsprofile zweier innerhalb eines Fräserganges aufeinanderfolgender Schneidstollen 1 und 2, die auf ihren linken Seiten die erfindungsgemäßen Schneidkantenformen 3 und 4 aufweisen. Auf den rechten Seiten weisen sie das geradflankige Bezugsprofil 12 eines herkömmlichen Wälzfräsers auf. Dieses ist auch auf der linken Seite als gestrichelte Linie 11 zum Vergleich mit dem erfindungsgemäßen Bezugsprofil eingezeichnet.

Die erfindungsgemäßen Schneidkanten sind nun dadurch gekennzeichnet, dass ihre Bezugsprofile regelmäßig angeordnete Profilierungsbereiche 5, 7, 9 und 6, 8, 10 aufweisen, in denen die Schneidkanten gegenüber dem herkömmlichen Bezugsprofil 11 konkav auf die zu erzeugenden Werkstückzahnflanken hin gekrümmt sind. Zwischen diesen Profilierungsbereichen liegen Übergangsbereiche 15, 17, 19 und 16, 18, 20 in denen eine konvexe Krümmung, von den Werkstückzahnflanken weg, vorliegt. Die so beschriebene wellenförmige Schneidkante mit konkaven Profilierungsbereichen (Tälern) und konvexen Übergangsbereichen (Bergen) tangiert in den tiefsten Punkten der Täler das herkömmliche Bezugsprofil 11. Die Abstände der Tiefpunkte benachbarter Täler sind alle gleich einer für das jeweilige Fräswerkzeug charakteristischen Konstanten. Diese Konstante ist ein ganzzahliges Vielfaches N (hier das Doppelte) der Verschiebung 22 des Eingriffspunktes von einem Schneidstollen zum nächsten innerhalb desselben Fräserganges. Die Schneidstollen 1 und 2 gehören zu zwei verschiedenen Schneidstollenarten, die entlang eines Fräserganges in regelmäßiger Reihenfolge angeordnet sind. Insgesamt besitzt das erfindungsgemäße Werkzeug N verschiedene Schneidstollenarten, die entlang der Fräsergänge in regelmäßiger Reihenfolge angeordnet sind. Für das in der Zeichnung gezeigte Beispiel ist N = 2.

Das erfindungsgemäße Werkzeug kann für den Bearbeitungsprozess derart zum Werkstück angeordnet werden, dass nur die Profilierungsbereiche der Schneidkanten an der Ausbildung der Werkstückevolventen beteiligt sind. Wenn dies der Fall ist, ergibt sich die kleinste Hüllschnittabweichung am Werkstück. Ausgehend von einer solchen optimalen Stellung kann das Werkzeug um diskrete Schritte derart geshiftet werden, dass in der dadurch erreichten Stellung wieder nur die Profilierungsbereiche an der Evolventenerzeugung teilnehmen. Dazu muss der Shiftschritt ein ganzes Vielfaches des Quotienten aus dem konstanten Abstand 23 der Tiefpunkte benachbarter Täler und dem Sinus des Eingriffswinkels 24 sein.

Zur weiteren Verringerung der Hüllschnittabweichungen können die erfindungsgemäßen Schneidkantenformen derart gestaltet werden, dass die Krümmungsradien 25, 27, 29 und 26, 28, 30 der Profilierungsbereiche 5, 7, 9 und 6, 8, 10 den Krümmungsradien der davon jeweils erzeugten Evolventenbereiche am Werkstück entsprechen.

### Bezugszeichen

- 1: Bezugsprofil eines Schneidstollens einer ersten Schneidstollensorte
- 2: Bezugsprofils eines Schneidstollens einer zweiten Schneidstollensorte
- 3: erfindungsgemäße Schneidkantenform des Schneidstollens 1
- 4: erfindungsgemäße Schneidkantenform des Schneidstollens 2
- 5: Profilierungsbereich am Schneidstollen 1
- 6: Profilierungsbereich am Schneidstollen 2
- 7: Profilierungsbereich am Schneidstollen 1
- 8: Profilierungsbereich am Schneidstollen 2
- 9: Profilierungsbereich am Schneidstollen 1
- 10: Profilierungsbereich am Schneidstollen 2
- 11: herkömmliches Schneidkantenprofil (angedeutet)
- 12: herkömmliches Schneidkantenprofil
- 13: Übergangsbereich am Schneidstollen 1
- 14: Übergangsbereich am Schneidstollen 2
- 15: Übergangsbereich am Schneidstollen 1
- 16: Übergangsbereich am Schneidstollen 2
- 17: Übergangsbereich am Schneidstollen 1
- 18: Übergangsbereich am Schneidstollen 2
- 22: Verschiebung des Eingriffspunktes von einem Stollen zum nächsten
- 23: konstanter Abstand zwischen benachbarten Tiefpunkten
- 24: Eingriffswinkel
- 25: Krümmungsradius in einem Profilierungsbereich des Stollens 1
- 26: Krümmungsradius in einem Profilierungsbereich des Stollens 2
- 27: Krümmungsradius in einem Profilierungsbereich des Stollens 1
- 28: Krümmungsradius in einem Profilierungsbereich des Stollens 2
- 29: Krümmungsradius in einem Profilierungsbereich des Stollens 1
- 30: Krümmungsradius in einem Profilierungsbereich des Stollens 2

## Patentansprüche

1. Werkzeug zur Herstellung einer Evolventen-Ver-zahnung nach dem sogenannten Wälzfräsverfahren
*mit folgenden Merkmale:*
- die Bezugsprofile (1, 2) der Schneidkanten der Zähne weisen Profilierungsbereiche (5, 7, 9 sowie 6, 8, 10) und Übergangsbereiche (15, 17, 19 sowie 16, 18, 20) auf,
***gekennzeichnet durch** folgende Merkmale:*
- die konkaven Profilierungsbereiche (5, 7, 9 sowie 6, 8, 10) tangieren in ihren tiefsten Punkten das herkömmliche Bezugsprofil (11, 12),
- die Abstände der Tiefpunkte benachbarter Täler sind untereinander gleich (Abstand 23),
- der Quotient N aus diesem konstanten Abstand (23) benachbarter Tiefpunkte und der Verschiebung (22) des Eingriffspunktes von Schneidstollen zu Schneidstollen ist eine ganze Zahl,
- der Wälzfräser weist insgesamt N verschiedene Schneidstollenarten auf, die sich **durch** die Lage der Tiefpunkte entlang der Schneidkanten unterscheiden und sich entlang jedes Fräserganges in regelmäßiger Folge abwechseln.

2. Werkzeug zur Herstellung einer Evolventen-Verzahnung nach Anspruch 1 **dadurch gekennzeichnet, dass** die konkaven Profilierungsbereiche (5, 7, 9 sowie 6, 8, 10) in ihren Krümmungsradien (25, 27, 29 sowie 26, 28, 30) den Krümmungsradien der Evolventenbereiche, die sie beim Bearbeitungsprozess erzeugen, entsprechen.

3. Werkzeug nach Anspruch 1 oder 2, **dadurch gekennzeichnet, daß** jeder Schneidstollen auf einer ihrer beiden Seiten das Bezugsprofil (1) mit den konkaven Profilbereichen (5, 7, 9) und den Übergangsbereichen (15,17,19), die konvex gekrümmt sind, aufweist, und daß jeder Schneidstollen auf der anderen Seite das herkömmliche, geradflankige Bezugsprofil (12) aufweist.

## Claims

1. Tool for making involute gear teeth according to the "hobbing method", having the following features:
- the reference profiles (1, 2) of the cutting edges of the teeth have profiling regions (5, 7, 9 and 6, 8, 10) and transition regions (15, 17, 19 and 16, 18, 20),
**characterized by** the following features:
- the concave profiling regions (5, 7, 9 and 6, 8, 10) are tangent to the conventional reference profile (11, 12) at their deepest points,
- the distances between the deep points of adjacent troughs are identical to one another (distance 23),
- the quotient N of this constant distance (23) between adjacent deep points and the displacement (22) of the engagement point from cutting tooth to cutting tooth is a whole number,
- the hob has a total of N different cutting tooth types which differ in the position of the deep points along the cutting edges and alternate in a regular sequence along each cutter thread.

2. Tool for making involute gear teeth according to Claim 1, **characterized in that** the concave profiling regions (5, 7, 9 and 6, 8, 10) correspond in their radii of curvature (25, 27, 29 and 26, 28, 30) to the radii of curvature of the involute regions which they generate during the machining process.

3. Tool according to Claim 1 or 2, **characterized in that** each cutting tooth has the reference profile (1) having the concave profile regions (5, 7, 9) and the transition regions (15, 17, 19) which are convexly curved on one of its two sides, and **in that** each cutting tooth has the conventional, straight-flank reference profile (12) on the other side.

## Revendications

1. Outil de fabrication d'un engrenage à développante selon le procédé dit à fraise-mère développante, ayant les caractéristiques suivantes :
- les profils de référence (1, 2) des arêtes de coupe des dents présentent des zones de profilage (5, 7, 9 et 6, 8, 10) et des zones de transition (15, 17, 19 et 16, 18, 20),
**caractérisé par** les caractéristiques suivantes :
- les zones de profilage concaves (5, 7, 9 et 6, 8, 10) touchent en leurs points les plus profonds le profil de référence usuel (11, 12),
- les distances entre les points les plus profonds de vallées voisines sont égales les unes aux autres (distance 23),
- le quotient N de cette distance constante (23) entre les points les plus profonds voisins et le décalage (22) du point d'attaque d'une dent de coupe à une autre est un nombre entier,
- la fraise-mère développante présente dans l'ensemble N différents types de dents de coupe, qui se distinguent par la position des points les plus profonds le long des arêtes de coupe et qui alternent le long de chaque pas de la fraise dans une succession régulière.

2. Outil de fabrication d'un engrenage à développante selon la revendication 1, **caractérisé en ce que** les zones de profilage concaves (5, 7, 9 et 6, 8, 10) correspondent de par leurs rayons de courbure (25, 27, 29 et 26, 28, 30) aux rayons de courbure des zones de développante qu'ils produisent au cours du processus d'usinage.

3. Outil selon la revendication 1 ou 2, **caractérisé en ce que** chaque dent de coupe présente sur l'un de ses deux côtés le profil de référence (1) avec les zones profilées concaves (5, 7, 9) et les zones de transition (15, 17, 19) qui ont une courbure convexe, et **en ce que** chaque dent de coupe présente sur l'autre côté le profil de référence (12) à flancs droits usuel.
